Europäisches Patentamt

(19) European Patent Office

Office européen des brevets

(11) Publication number: **0 074 847**

**A1**

(12) **EUROPEAN PATENT APPLICATION**

(21) Application number: **82304837.6**

(22) Date of filing: **14.09.82**

(51) Int. Cl.³: **F 16 C 33/72**
**F 16 C 17/04, B 62 D 7/18**

(30) Priority: **14.09.81 GB 8127676**

(43) Date of publication of application:
**23.03.83 Bulletin 83/12**

(84) Designated Contracting States:
**AT BE CH DE FR GB IT LI LU NL SE**

(71) Applicant: **M.C. HIVES LIMITED**
**Primrose Avenue Fordhouses**
**Wolverhampton WV10 8AW West Midlands(GB)**

(72) Inventor: **Hives, Matt Graham**
**Roseland Boningale**
**Albrighton Nr. Wolverhampton W. Midlands(GB)**

(74) Representative: **Skone James, Robert Edmund et al,**
**GILL JENNINGS & EVERY 53/64 Chancery Lane**
**London, WC2A 1HN(GB)**

(54) **Thrust bearing.**

(57) A thrust bearing comprises two coaxial races (1,2) positioned on opposite sides of bearing means (3). An annular, one-piece element (4) of resilient material surrounds the races (1,2) and has integral, axially opposed, radially inwardly facing flanges (5) which retain the races (1,2) against axial outward movement. The one-piece annular element (4) also has a pair of axially outwardly facing sealing surfaces (8).

*Fig.1.*

Croydon Printing Company Ltd.

EP 0 074 847 A1

M.C.HIVES LIMITED.                    REF: 52/2018/02.

THRUST BEARING.

The invention relates to thrust bearings which comprise two coaxial races positioned on opposite sides of bearing means.

It is often required that a fully sealed thrust bearing is provided and this has commonly been achieved by positioning annular metal discs on the axially outwardly facing sides of the races and connecting the discs together by means of rubber elements. This construction is complex and expensive in view of the number of components which are required.

In accordance with the present invention, a thrust bearing comprises two coaxial races positioned on opposite sides of bearing means; and an annular, one-piece element of resilient material which surrounds the races, has an axially outwardly facing sealing surface, and has integral, axially opposed, radially inwardly facing flanges which retain the races against axial outward movement.

The use of a one-piece element considerably simplifies the construction of the bearing with a corresponding decrease in the cost of construction.

Preferably,two axially opposed sealing surfaces are provided by the element and the or each surface may be defined by an axially outwardly projecting, annular rib which seals against a part of the assembly in which the bearing is mounted, in use. Thus, as the bearing is mounted into a supporting assembly, parts of the assembly will abut and seal against the or each projecting rib, the corresponding flanges being urged towards the races at which point the bearing is sealed. This enables the bearing to be made without the need for precise tolerances.

.       Preferably, the resilience of the element is such that the element can be distorted to provide compressive resistance against the respective abutting part of the assembly to improve the seal. It is also convenient if each flange has substantially the same radial dimension so that the races can be pushed into the element from either end.

The element may be made from a plastics material but is preferably made from rubber.

The bearing means may be any conventional type such as ball, roller, needle roller, or plain, and these bearing elements may be caged or uncaged.

An example of a sealed thrust bearing in accordance with the present invention is illustrated in the accompanying diagrammatic drawings, in which:-

Figure 1 is a cross-section through the bearing; and,

Figure 2 is a cross-section through a king pin assembly incorporating the thrust bearing shown in Figure 1.

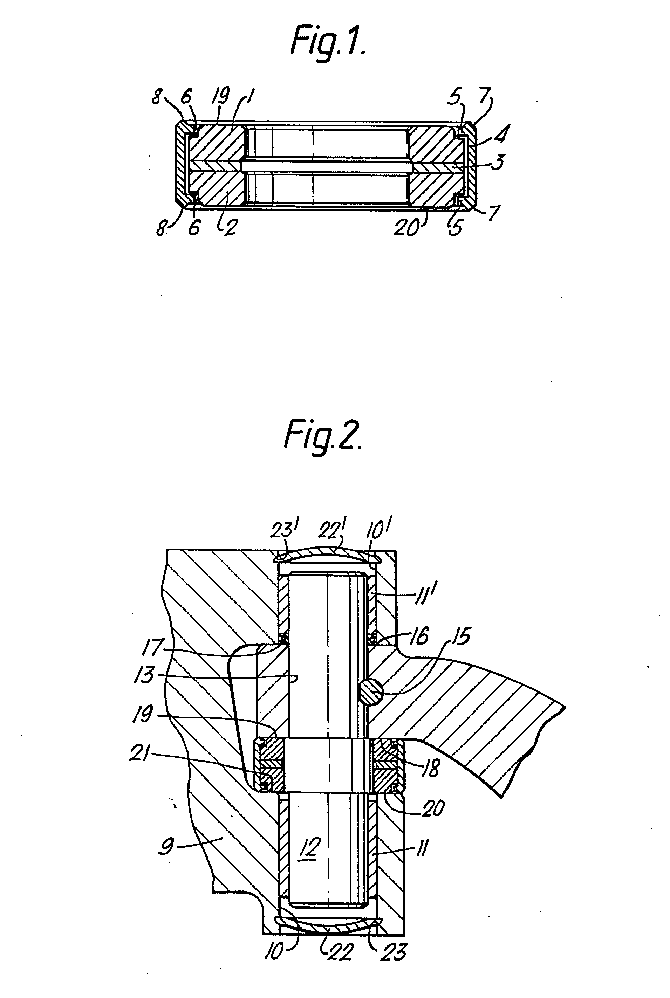

The bearing shown in Figure 1 comprises two steel bearing rings 1, 2 positioned on opposite sides of a bearing element 3.  The bearing element 3 may comprise plain, ball, roller, or needle roller bearings which may be of the caged or uncaged types.

The bearing rings 1, 2 are retained in position by means of an annular, one-piece plastics band 4. The band 4 has two annular, radially extending, integral flanges 5 which are located in a corresponding pair of annular notches 6 provided on the bearing rings 1,2. The band 4 also has two axially extending, projecting ribs 7 which provide respective sealing surfaces 8. The flanges 5 retain the bearing rings 1, 2 against axial displacement.

Figure 2 illustrates the thrust bearing shown in Figure 1 mounted in a king pin assembly. The assembly comprises a support yoke 9 having a pair of opposed bores 10, 10'. Two bushes 11,11' are mounted in the bores 10, 10' respectively. A king pin 12 extends between and into the bushes 11,11' and a thrust bearing in which it is rotatably mounted. The king pin 12 also extends through a bore 13 in a beam 14 to which it is non-rotatably attached by means of a cotter pin 15. An upper surface 16 of the beam 14 is sealed to the support yoke 9 by a lip seal 17.

A lower surface(as seen in the drawing) 18 of the beam 14 abuts against a bearing surface 19 of the steel bearing ring 1 of the thrust bearing shown in Figure 1. The surface 18 also abuts against the sealing surface 8 of the adjacent rib 7 of the band 4. This abutment seals the thrust bearing/beam connection and the associated flange 5 of the band 4 is urged downwardly as shown in the drawing. The resilience of the band 4, however, is such that the flange 5 does not abut the steel ring 1.

A lower bearing surface 20 on the steel ring 2 rests on a surface 21 of the support yoke 9. The surface 20 also abuts the sealing surface 8 of the adjacent rib 7 of the band 4 with which it seals and the corresponding flange 5 is urged towards the ring 2. Again, however, the flange 5 does not abut the ring 2.

A pair of covers 22,22' are mounted in respective grooves 23,23' in the bores 10,10' respectively axially outwardly of the king pin 12.

- 4 -

## CLAIMS.

1.    A thrust bearing comprising two coaxial races (1,2) positioned on opposite sides of bearing means (3) characterised in that an annular, one-piece element (4) of resilient material surrounds the races (1,2), has an axially outwardly facing sealing surface (8 ), and has integral, axially opposed, radially inwardly facing flanges (5) which retain the races (1,2) against axial outward movement.

2.    A thrust bearing according to claim 1, characterised in that two axially opposed sealing surfaces (8 ) are provided.

3.    A thrust bearing according to claim 1 or claim 2, wherein the or each sealing surface(8 )is provided by an axially outwardly projecting, annular rib (7) which seals against part of an assembly in which the bearing is mounted, in use.

4.    A thrust bearing according to any of the preceding claims, wherein the resilience of the element (4) is such that the element (4) can be distorted to provide compressive resistance against the respective abutting part of an assembly in which the bearing is mounted, to improve the seal.

5.    A thrust bearing according to any of the preceding claims, wherein each flange (5) has substantially the same radial dimension so that the races (1,2) can be pushed into the element (4) from either end.

6.    An assembly comprising a support body(9); a spindle (12) rotatably carried by the support body (9) and extending through a thrust bearing in accordance with any of the preceding claims; and a member (14) mounted to the spindle, abutting and sealing against the sealing surface (8) at one axial end of the thrust bearing, the other axial end of thrust bearing abutting the support body (9).

0074847

Fig.1.

Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 16 C 33/72 |
| X | US-A-3 294 413 (JUROSEK) <br> * Column 2, line 38 - column 3, line 21; figure 1 * | 1-6 | F 16 C 17/04 <br> B 62 D 7/18 |
| | --- | | |
| A | US-A-3 844 631 (OTTO) <br> * Column 3, line 2 - column 4, line 33; figure 2 * | 1-4,6 | |
| | --- | | |
| A | FR-A-2 176 330 (SCHWARZBICH) <br> * Page 5, lines 34-36; figure 9 * | 1,5 | |
| | --- | | |
| A | FR-A-2 173 552 (DURKOPPWERKE) | | |
| | --- | | |
| A | FR-A-2 091 152 (SKEFKO) | | |
| | ----- | | |

TECHNICAL FIELDS SEARCHED (Int. Cl. ³)

F 16 C
B 62 D

The present search report has been drawn up for all claims

| Place of search THE HAGUE | Date of completion of the search 06-12-1982 | Examiner BARON C. |
|---|---|---|